# EUROPEAN PATENT APPLICATION

(11) **EP 4 465 617 A1**
(43) Date of publication of application: **20.11.2024**
(21) Application number: 23739973.8
(22) Date of filing: 09.01.2023
(51) Int. Cl.: H04L 69/06

(54) **DATA PACKET PROCESSING METHOD AND APPARATUS AND NETWORK DEVICE**

(30) Priority: 13.01.2022 CN 202210037301
(71) Applicant: Datang Mobile Communications Equipment Co., Ltd., Beijing 100085 (CN)
(72) Inventor: GU, Xiaofei, Beijing 100085 (CN)
(74) Representative: Studio Torta S.p.A.
(86) International application number: PCT/CN2023/071351
(87) International publication number: WO 2023/134631

(57) **Abstract**

The invention relates to the technical filed of data packet processing, and provides a data packet processing method and apparatus and a network device. The method is executed by a first network device, and comprises: receiving data packet information sent by a second network device, the data packet information carrying a data packet; acquiring, according to the data packet information, function locator information of at least two functions to be performed by the first network device on the data packet; and determining a target action corresponding to the function locator information in a preset flow table, and performing the target action on the data packet.

## Description

### CROSS-REFERENCE TO RELATED APPLICATION

This application claims a priority to Chinese Patent Application No. 202210037301.6 filed on January 13, 2022, the disclosures of which are incorporated in their entirety by reference herein.

### TECHNICAL FIELD

The present disclosure relates to the technical field of data packet processing, and in particular, to a data packet processing method, a data packet processing apparatus, and a network device.

### BACKGROUND

When using user plane technology of an Internet Protocol Version 6 (IPv6) Segment Routing (SRv6), due to the limitation of a Segment ID (SID) field function, a single function of the SID cannot meet two or more times of processing the data packet by a certain device. When a device needs to continuously process data packets twice or more than twice, the SID of the SRv6 cannot achieve processing of the data packets. How to implement multiple times of processing a data packet by a certain device based on the related SRv6 user plane technology is an urgent problem to be solved.

### SUMMARY

Embodiments of the present disclosure provide a data packet processing method, a data packet processing apparatus, and a network device, to resolve a problem in the related art that multiple times of processing a data packet cannot be implemented by one network device.

To resolve the foregoing technical problem, an embodiment of the present disclosure provides a data packet processing method, performed by a first network device, wherein the method includes: receiving data packet information from a second network device, wherein the data packet information carries a data packet; obtaining, based on the data packet information, function locator information of at least two functions to be performed by the first network device on the data packet; determining a target action corresponding to the function locator information in a preset flow table, and performing the target action on the data packet.

Optionally, obtaining, according to the data packet information, the function locator information of at least two functions to be performed by the first network device on the data packet includes one of following:
obtaining, in a function field of a segment identifier corresponding to the first network device, the function locator information of the at least two functions to be performed by the first network device on the data packet, wherein a segment identifier corresponding to the first network device is located in a segment routing header SRH of the data packet information; obtaining, in a type length value TLV field of the SRH of the data packet information, the function locator information of the at least two functions to be performed by the first network device on the data packet.

Optionally, the function locator information of the at least two functions is indicated by different bits in the function field; or the function locator information of the at least two functions is indicated by a same bit in the function field.

Optionally, a flags field in the SRH in the data packet information is configured to indicate whether there is at least one segment identifier corresponding to a plurality of functions, and when the flags field in the SRH in the data packet information indicates that there is the at least one segment identifier corresponding to the plurality of functions, a tag field in the data packet information is configured to indicate the at least one segment identifier and a quantity of the plurality of functions corresponding to the at least one segment identifier.

Optionally, in a case that a quantity of functions to be performed by the first network device on the data packet is greater than a preset value, the SRH in the data packet information includes at least two segment identifiers corresponding to the first network device; the preset value is a maximum value of a quantity of functions indicated by a segment identifier corresponding to the first network device.

A network device is further provided, the network device being a first network device, wherein the network device includes a memory, a transceiver, and a processor; the memory is configured to store a computer program; the transceiver is configured to send and receive data under the control of the processor; and the processor is configured to read the computer program in the memory and perform the following operations: receiving data packet information from a second network device through the transceiver, wherein the data packet information carries a data packet; obtaining, based on the data packet information, function locator information of at least two functions to be performed by the first network device on the data packet; determining a target action, in a preset flow table, corresponding to the function locator information, and performing the target action on the data packet.

Optionally, the processor is configured to read the computer program in the memory and perform one of the following operations: obtaining, in a function field of a segment identifier corresponding to the first network device, the function locator information of the at least two functions to be performed by the first network device on the data packet, wherein a segment identifier corresponding to the first network device is located in a segment routing header SRH of the data packet information; obtaining, in a type length value TLV field of the SRH in the data packet information, the function locator information of the at least two functions to be performed by the first network device on the data packet.

Optionally, the function locator information of the at least two functions is indicated by different bits in the function field; or the function locator information of the at least two functions is indicated by a same bit in the function field.

Optionally, a flags field in the SRH in the data packet information is configured to indicate whether there is at least one segment identifier corresponding to a plurality of functions, and when the flags field in the SRH in the data packet information indicates that there is the at least one segment identifier corresponding to the plurality of functions, a tag field in the data packet information is configured to indicate the at least one segment identifier and a quantity of the plurality of functions corresponding to the at least one segment identifier.

Optionally, in a case that a quantity of functions to be performed by the first network device on the data packet is greater than a preset value, the SRH in the data packet information includes at least two segment identifiers corresponding to the first network device; the preset value is a maximum value of a quantity of functions indicated by a segment identifier corresponding to the first network device.

A data packet processing apparatus applied to a first network device is further provided in the present disclosure, wherein the apparatus includes: a receiving unit, configured to receive data packet information from a second network device, wherein the data packet information carries a data packet; an obtaining unit, configured to obtain, based on the data packet information, function locator information of at least two functions to be performed by the first network device on the data packet; a performing unit, configured to determine a target action, in a preset flow table, corresponding to the function locator information, and perform the target action on the data packet..

Optionally, the obtaining unit is specifically configured to: obtain, in a function field of a segment identifier corresponding to the first network device, the function locator information of the at least two functions to be performed by the first network device on the data packet, wherein a segment identifier corresponding to the first network device is located in a segment routing packet header SRH of the data packet information; obtain, in a type length value TLV field of the SRH of the data packet information, the function locator information of the at least two functions to be performed by the first network device on the data packet.

Optionally, the function locator information of the at least two functions is indicated by different bits in the function field; or the function locator information of the at least two functions is indicated by a same bit in the function field.

Optionally, a flags field in the SRH in the data packet information is configured to indicate whether there is at least one segment identifier corresponding to a plurality of functions, and when the flags field in the SRH in the data packet information indicates that there is the at least one segment identifier corresponding to the plurality of functions, a tag field in the data packet information is configured to indicate the at least one segment identifier and a quantity of the plurality of functions corresponding to the at least one segment identifier.

Optionally, in a case that a quantity of functions to be performed by the first network device on the data packet is greater than a preset value, the SRH in the data packet information includes at least two segment identifiers corresponding to the first network device; the preset value is a maximum value of a quantity of functions indicated by a segment identifier corresponding to the first network device.

A processor-readable storage medium is further provided in the embodiments of the present disclosure, wherein the processor-readable storage medium stores a computer program, and the computer program is configured to cause a processor to perform the method above.

According to another aspect of the present disclosure, at least one embodiment provides a chip, wherein the chip includes a processor and a communication interface, the communication interface is coupled to the processor, and the processor is configured to run a program or an instruction to implement the method as described above.

According to another aspect of the present disclosure, at least one embodiment provides a computer program product stored in a non-volatile storage medium, the computer program product being executed by at least one processor to implement the method as described above.

The beneficial effects of the present disclosure are:

According to the solution, the function locator information of the plurality of functions is carried in the data packet information, so that one network device can perform multiple actions on the data packet, so that the beneficial effects of good flexibility, cost reduction, time delay reduction, overhead saving and the like can be achieved.

### BRIEF DESCRIPTION OF THE DRAWINGS

In order to more clearly illustrate the technical solutions in the embodiments of the present disclosure or the related art, the drawings required in the description of the embodiments or the related art will be briefly described below, and obviously, the drawings in the following description are merely some embodiments disclosed in the present disclosure, and for those of ordinary skill in the art, other drawings may be obtained according to these drawings without creative efforts.
FIG. 1 is a schematic diagram of a format of an SRH extension header;
FIG. 2 is a schematic diagram of a three-layer programming space in an SRH;
FIG. 3 is a schematic diagram of a format of a TLV;
FIG. 4 is a schematic flowchart of a data packet processing method according to an embodiment of the present disclosure;
FIG. 5 shows a network topology diagram of first and second specific application situations;
FIG. 6 is a schematic diagram of a data packet forwarding process and a header change of each hop according to the first specific application situation;
FIG. 7 is a schematic diagram of a data packet forwarding process and a header change of each hop according to the second specific application situation;
FIG. 8 is a schematic diagram of a data packet processing apparatus according to an embodiment of the present disclosure;
FIG. 9 is a structural diagram of a network device according to an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only part, rather than all, of the embodiments of the present disclosure. All other embodiments obtained by a person of ordinary skill in the art based on the embodiments of the present disclosure without creative efforts shall fall within the protection scope of the present disclosure.

In the specification and claims of the present disclosure, the terms "first", "second", and the like are intended to distinguish similar objects, and are not necessarily used to describe a specific order or sequence. It should be understood that the terms used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, a method, a system, a product, or a device that includes a series of steps or units is not necessarily limited to those steps or units listed clearly, but may include other steps or units that are not clearly listed or inherent to the process, method, product, or device.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects. In the embodiments of the present disclosure, the term "a plurality of" means two or more, and other quantifiers are similar.

In the embodiments of the present disclosure, words such as "exemplary" or "for example" are used to represent examples, illustrations, or descriptions. Any embodiment or design described as "example" or "for example" in the embodiments of the present disclosure should not be explained as being more preferred or having more advantages than another embodiment or design. Exactly, words such as "exemplary" or "for example" are used to present related concepts in a specific manner.

The embodiments of the present disclosure are described below with reference to the accompanying drawings. The data packet processing method and apparatus and the network device provided in the embodiments of the present disclosure may be applied to a wireless communication system. The wireless communication system may be a system using a fifth generation (5G) mobile communication technology (hereinafter referred to as a 5G system for short), and a person skilled in the art may understand that a 5G new radio (NR) system is merely an example and is not limited thereto.

Some concepts related to the embodiments of the present disclosure are first described as follows.

### 1. Segment Routing IPv6 (SRv6)

The SRv6 is an application of a Segment Routing (SR) technology in an IPv6 network. By inserting a routing extension segment routing header (SRH) into the IPv6 packet, and adding segment identifiers (Segment ID, SID) of all segments, that is, a SID list (List), to be passed along the path into the SRH, a forwarding path of the packet is explicitly specified. The appearance of SRv6 is a huge innovation, which combines a software-defined networking (SDN) technology to enable a programmable network, which provides innovative soil for network basic services and value-added network services in the era of cloud networks.

In the SRv6 technology, 128-bit IPv6 addresses are used as SIDs, and their extremely simple and programmable characteristics realize any access and any connection, various network service requirements can be flexibly met, and meanwhile, higher reliability and expandability are provided, which will become the core technology of a new generation of IP bearer networks. In SRv6, the SID is used to define a network function to represent a network instruction. A SRv6 SID uses an IPv6 address format, but does not correspond to an interface address on any device. The format is shown in Table 1:

**Table 1 SRv6 SID format**

| | | |
|---|---|---|
| Locator | Function | Arguments |

The Locator is an identifier allocated to a network node, and is configured to route and forward a data packet, wherein the Locator in the SRv6 SID is a variable-length part, and is configured to adapt to networks of different scales. Function is a forwarding action to be performed by an instruction, which is equivalent to an operation code of a computer instruction, and in SRv6 network programming, different forwarding behaviors are expressed by different Functions, and a SRv6 SID endpoint behavior (Endpoint Behavior) is a function in the SID. Arguments are the parameter required by the instruction during execution. These parameters may contain flows, services, or any other related information. For example, an instruction defined for performing packet fragmentation on a network packet may enable the fragmentation length of the packet to be carried in the Arguments.

It should be noted that, the Locator + Function + Arguments <= 128 is required while the number of bits occupied by each part of the Locator, the Function, and the Arguments is not specified.

### 2. Behaviors of SRv6 Endpoint

In the SRv6 network programming standard, the SRv6 endpoint processes the SRv6 packet through a locally defined behavior. The SRV6 defines a variety of endpoint behaviors, each of which needs to instantiate them and assign SIDs, and is published through the routing protocol in order to externally know the behavior that the endpoint can provide. Common endpoint behaviors have END, END.X, END. DT4, END. DT6, End.B6.Encaps, H.Encaps, End.DX4, etc. to implement functions such as an underlay routing, an overlay service bearer, a traffic engineering, and a service chain. The processing logic corresponding to the Endpoint behavior is not specifically described herein.

### 3. SRv6 Extension Header Design

In order to implement segment routing based on an IPv6 forwarding plane, an IPv6 routing extension packet header is newly added with one type, referred to as a segment routing header (SRH), and the extension packet header specifies an IPv6 explicit path, and stores path constraint information (which may be a segment list) of IPv6.

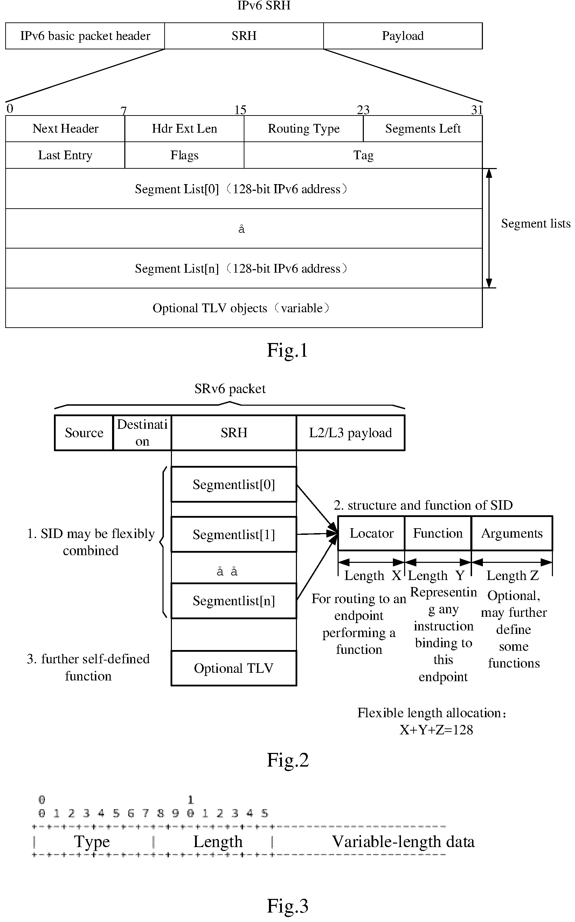

The source endpoint adds an SRH extension header to the IPv6 packet, and the forwarding endpoint may forward the IPv6 packet according to the path information included in the SRH extension header. The format of the SRH extension header is shown in FIG. 1.

The value of the Next Header in the basic header of the IPv6 is 43, indicating that the next packet header is a routing extension header. A value of a routing type field of the routing extension header is 4, indicating that the routing extension header is an SRH. The SRH mainly includes the following parts, as shown in Table 2:

**Table 2 SRH packet header field**

| Field name | Length | Meaning |
|---|---|---|
| Next Header | 8bits | Indicating a type of a packet header immediately after SRH. |
| Hdr Ext Len | 8bits | Length of SRH header with a unit of 8 bytes, which is mainly a length of Segment List[0] to Segment List [n] |
| Routing Type | 8bits | Routing type field having a value of 4, indicating that SRH is carried |
| Segments Left (SL) | 8bits | Identifying the number of SIDs not processed yet, and having an initial value n-1 (n indicates the number of SIDs in the route extension header), which is decreased by one after passing one endpoint. |
| Last Entry | 8bits | Index of last entry including the segment list in Segment List. |
| Flags | 8bits | Reserved flag used for special processing, such as OAM |
| Tag | 16bits | Marking a group of packets having identical characteristic |
| Segment List[0..n] | 128*n bits | SID lists, arranged in a sequence of endpoints from farthest to nearest along a packet forwarding path, Segment List [0] indicates the last SID in the path, Segment List [1] indicates the last but one SID in the path, and so on_{∘} |
| Optional TLV | variable | Variable length Part TLV |

### 4. SRv6 three-layer Programming Space

The network programmability of SRv6 is embodied in the SRH extension header. There are three layers of programming spaces in the SRH as shown in FIG. 2:
The first part is path information composed of Segment List, which is programmable, and can combine a plurality of Segments to form a SRv6 path.

The second part is application of 128 bits of the SRv6 SID. Each segment of the SRv6 is 128-bit long, the SRv6 SID can be flexibly divided into multiple segments, and the length of each segment can also be changed, thereby having flexible programming capability.

The third part is an optional Type-Length-Value (TLV) following the segment sequence. When the packet is transmitted in the network, some irregular information needs to be encapsulated on the forwarding plane, and they may be completed by a flexible combination of TLV in the SRH.

The SRV 6 has a more powerful network programming capability through a three-layer programming space, and can better meet different network path requirements.

### 5. SRH TLVS

TLV provides metadata for segment processing, the currently defined unique TLV is a hash-based message authentication code (HMAC) and a padding TLV, and other TLVs may be defined in the future. When a defined SID is processed, all TLVs will be ignored unless otherwise indicated locally. Thus, both TLV and HMAC are optional for any embodiment. However, the implementation of adding or parsing the TLV must support the PAD TLVs. Other documents may define other TLVs and processing rules.

When Hdr Ext Len is greater than (Last Entry +1) × 2, the TLV will be displayed.

When the TLV is processed at the segment endpoint, the TLV MUST be completely contained in the SRH determined by Hdr Ext Len. Detecting that the TLV is beyond the boundary of the SRH Hdr Ext Len may cause the Internet Control Message Protocol (ICMP) parameter problem code 0 and a message is sent to the source address, pointing the Hdr Ext Len field of the SRH, and discarding the data packet.

The format of the TLV is shown in FIG. 3.

Type: 8-bit code points from the "segment routing header TLV" IANA-SRHTLV, and the type that cannot be identified must be ignored when received.

Length: The length of the variable length data field (in bytes).

Variable-Length Data: Type-specific data.

The Type Length Value (TLV) entry contains optional information that can be used by the endpoint identified in the destination address (DA) of the data packet.

Each TLV has its own length, type, and semantics. The code point assigned to each TLV type by the Internet Assigned Number Authority (IANA)) defines the type and semantics of the information carried in the TLV. The plurality of TLVs may be encoded in the same SRH.

The highest bit (bit 0) of the TLV type specifies whether the type of TLV data can be changed en route to the final destination of the packet:
0: The TLV data is unchanged en route;
1: The TLV data does vary en route.

Alignment requirements of all TLVs are specified using an xn + y format. The xn + y format is defined according to RFC 8200. When constructing the SRH, the SR source endpoint uses xn + y alignment requirements of the TLV and the padding TLV.

The "length" field of the TLV is used to skip the TLV when checking the SRH to prevent the endpoint from not supporting or being unable to identify the type. The length, in bytes, defines the TLV length, and does not include the "type" and "length" fields.

When a device needs to perform multiple times of processing or multiple functions of processing on data packets, the following two methods are usually used:
1) A multi-level flow table is delivered to the device, and the data packet is processed multiple times.
2) A device is added, and after the packet is processed by a third-party device and then is transferred back to the current device for processing.

At present, the related art can meet multiple processing and transmission of data packets to a certain extent, but there are still many problems:
1. flexibility is poor, and the forwarding processing of the data packet cannot be adjusted according to requirements;
2. a cost is high, and an additional device is required to meet different processing requirements for the data packet;
3. a delay is large, and the transmission delay of the data packet is increased after processed by the plurality of devices;
4. overhead is large, the plurality of SIDs are encapsulated by the first endpoint to process the data packet, and the overhead rate of the data packet is increased;
5. A flow table capacity is limited, the number of flow tables that can be accommodated by the device is limited, and if there are too many flow tables delivered to the device, the capacity range of the device will be exceeded.

Embodiments of the present disclosure provide a data packet processing method and apparatus, and a network device, to resolve a problem in the related art that multiple times of processing a data packet cannot be implemented by one network device, and solve the problems of poor flexibility, high cost, large delay, large overhead, and limited flow table capacity in multiple times of processing and transmitting the data packet.

The method and the apparatus are based on the same application concept, and because the method and the apparatus solve a similar principle of a problem, the implementation of the apparatus and the method may be obtained by referring to each other, and details are not described herein again.

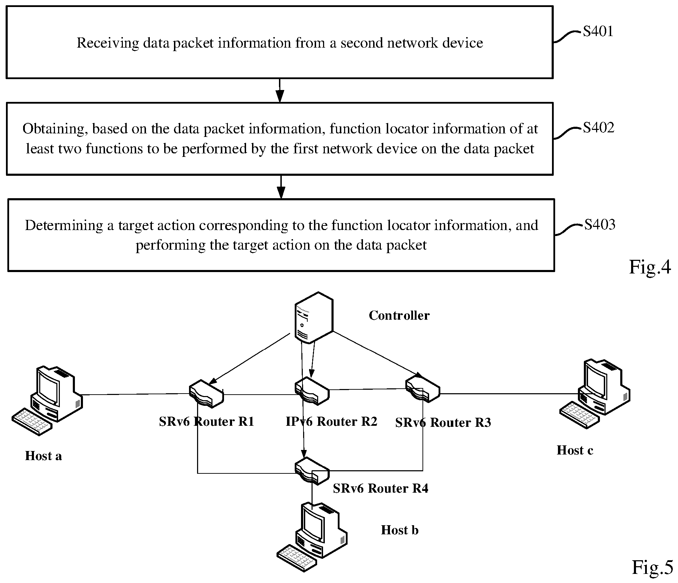

As shown in FIG. 4, an embodiment of the present disclosure provides a data packet processing method, performed by a first network device. The method includes:
Step S401: receiving data packet information sent by a second network device.

It should be noted that the data packet information carries a data packet.

Step S402: obtaining, according to the data packet information, function locator information of at least two functions to be performed by the first network device on the data packet; and
It should be noted that, the data packet information carries the function locator information, and the first network device may know, after searching a preset flow table according to the function locator information, what action (or what operation, or what kind of function processing) the first network device needs to perform on the data packet.

Step S403: determining, in a preset flow table, a target action corresponding to the function locator information, and performing the target action on the data packet.

It should be noted that, since a plurality of functions may be implemented by the first network device, that is, the first network device may perform a plurality of functions, in this service processing process, the first network device may only need to perform some functions, the data packet information indicates an index (that is, function locator information) of a function that needs to be performed by the first network device, and what action each function specifically corresponds to is defined by a preset flow table, and the preset flow table refers to a definition of correspondence between an index of a function and an action and is delivered to the first network device by the controller, that is, the preset flow table includes an index of a function and an action corresponding to the index. Specifically, after obtaining the function locator information, the first network device needs to search the preset flow table for an action corresponding to each piece of function locator information, and after the action corresponding to the function locator information is obtained, the action is performed on the data packet.

For example, the first network device obtains two pieces of function locator information from the data packet information: a function index A and a function index B respectively; an action corresponding to the index A is defined as action 1, an action corresponding to the index B is action 2, an action corresponding to the index C is action 3, and after searching the preset flow table, the first network device determines that the action 1 and the action 2 need to be performed, and then the first network device performs the action 1 and the action 2 respectively corresponding to the index A and the function index B on the data packet.

It should be noted that the actions mentioned in the embodiments of the present disclosure may be, for example, H.Encaps (i.e. adding IPv6 and a header of an SRH on an outer layer), End (i.e. Segment Left minus 1, and updating a destination address of IPv6 according to a Segment list), End. DX 4 (i.e. peeling off the IPv6 header of the outer layer, sending the contained IPv4 data packet to the corresponding device), and End. IDS (that is, performing intrusion detection on a data packet), and the like.

It should be noted that, both the first network device and the second network device refer to a forwarding device in a data packet forwarding process. These forwarding devices are all connected to a controller (for example, a Software Defined Network (SDN) controller), which is managed by the controller in a unified manner.

Optionally, in at least one embodiment of the present disclosure, the implementation of step S402 may adopt one of the following:
A11: obtaining, in a function field in a segment identifier (SID) corresponding to the first network device, function locator information of at least two functions to be performed by the first network device on the data packet; and
It should be noted that the segment identifier corresponding to the first network device is located in a segment routing packet header (SRH) in the data packet information.

That is, in this case, the function locator information is indicated by a function field in the SID in the SRH.

Optionally, the function locator information of the at least two functions is indicated by using different bits in the function field. Further, it should be noted that the flags field in the SRH in the data packet information is configured to indicate whether there is at least one SID corresponding to a plurality of functions, and when the Flags field in the SRH in the data packet information indicates that there is at least one SID corresponding to a plurality of functions, a Tag field in the data packet information is configured to indicate the at least one segment identifier and the quantity of the plurality of corresponding functions.

For example, whether there are a plurality of functions and a quantity of functions may be identified by using the Flags field and the Tag field in an SRH header, for example, if the Flags field is 0, it indicates that all SIDs have only one function; if the Flags field is 1, it indicates that a certain SID has a plurality of functions; further, which SID has the plurality of functions and the specific number of the plurality of functions may be determined according to the value of the Tag, and if an additional argument is required to process the data packet according to the plurality of functions, an argument may be defined in an Arguments field. If there is a priority, data packets are processed according to the priority; if there is no priority, the data packets are processed according to a defined execution sequence. The expanded SRv6 SID format is shown in Table 3:

**Table 3. format of SRv6 SID after function expansion**

| | | | | |
|---|---|---|---|---|
| Locator | Function1 | Function2 | ....... | Arguments |

In this case, one function defined by the SID is defined as two or more functions according to functions and quantity requirements, as long as it is ensured that Locator+Functions+Arguments <=128 bits, and when the length of the Locator+Functions+Arguments is less than 128 bits, the remaining bits of the SID may be set to 0

Specifically, after receiving the IPv6 packet, the forwarding device (for example, the SRv6 endpoint) searches the SID according to the IPv6 destination address (DA), and when the function locator information carried in the SID is obtained, the flow table is searched to perform an action corresponding to the function locator information; after receiving the IPv6 packet, a non-SRv6 forwarding device searches a global routing table according to the IPv6 destination address (DA), and forwards the IPv6 packet according to the next hop indicated by the global routing table.

A specific implementation process of this case is as follows: first, SRv6 SID Endpoint Behaviors are defined, that is, a function in the SID is a forwarding processing logic and an execution command for the data packet, and for a network device needing to process a data packet for multiple times, expanded SRv6 SID Endpoint Behaviors are configured or defined on the network device; then, after receiving the service request of a data stream, the application layer or the SDN controller performs the following process: issuing or filling the flow table according to different configurations defined for different devices, the function locator information in the data packet matching the flow table, and when the function locator information in the data packet matches the index in the flow table, an action domain is entered (it should be noted that the action domain refers to a set of data packet processing actions, the Function part of the SID defined in the SRv6 data packet in the present disclosure), and the SRv6 SID Endpoint Behaviors defined in the action domain are performed. The defined SRv6 SID Endpoint Behaviors may be basic operations specified by a protocol, or may be operations after functions of the SID are expanded, to implement processing of the basic functions and expanded functions on the data packet, that is, multiple times of processing.

In another optional case, the function locator information of the at least two functions is indicated by using the same bit in the function field, that is, in this case, the function field in the SID is endowed with a new index, that is, a new index can represent a plurality of functions, and for a network device that needs to perform multiple functions, the index unallocated in the protocol may be used in the Function field in the SID: the unallocated indexes in the current technical specification are 40-32766, i.e., these unallocated indexes identify processing and forwarding of multiple functions needing to be performed. For example, the index 40 may be used to identify that 2 functions are to be performed, the index 41 may be used to identify that 3 functions are to be performed, and so on. The specific used index and the number of identified functions may be defined according to user requirements, and the SRv6 SID format using the new locators is shown in Table 4:

**Table 4. SRv6 SID format with unallocated locators**

| | | |
|---|---|---|
| Locator | Function(40-32766) | Arguments |

A specific implementation process of this case is: first, a specific signaling (for example, by expanding a BGP protocol of SRv6) may be used to define a list of multiple functions (the list includes a function locator corresponding to at least one function), and new indexes are given to the functions in the list (the unallocated indexes 40-32766 above), that is, each new index corresponds to one function list (the function list includes at least two functions), and the function list defines processing logic of the network device for the data packet; and the controller issues the newly defined function list to the network device through specific signaling, The defined function lists delivered to the network device may be multiple lists to be performed by the network device, or a single function list to be performed by the network device may also be issued. When the data packet arrives at the network device, the new index of the function list defined or configured in advance in the network device is matched according to the new index carried in the function field in the SID of the data packet, and after the function list corresponding to the new index is matched, the network device is indicated to execute the corresponding function list, that is, the network device searches the flow table for a corresponding action according to the function locator information of each function in the function list, and further, performs multiple times of processing the data packet according to requirements.

A12: In a type length value (TLV) field in an SRH in the data packet information, function locator information of at least two functions to be performed by the first network device on the data packet is obtained, wherein a function field in a segment identifier corresponding to the first network device in the SRH in the data packet information has an association relationship with the function locator information in the TLV field.

It should be noted that, in this case, the function locator information is indicated by the TLV field in the SRH, and optionally, since the TLV field may have the function locator information corresponding to a plurality of forwarding devices; in order to accurately enable the function locator information to correspond to the forwarding device, the function locator information in the TLV field should be associated with the function field in the SID, for example, a list of one or more pieces of function locator information is defined in the TLV field, and the function field in the SID refers to the index of the list of the function locator information.

For example, the function list index and the content (which functions are included and the execution sequence of the function) may be defined in the optional field TLV of the SRH header, and the function part in the SID indicates that the function list specifically to be performed by the function list index is obtained from the optional TLV, and the function list is performed, and the TLV defined in the current protocol only has an HMAC and a padding TLV, and this case may identify a plurality of functions by defining new TLVs which, for example, may be referred to as MFUN.

Optionally, a specific implementation in this case may be:
determining whether a type length value TLV field exists in the SRH according to the relationship between the length of the SRH header in the SRH in the data packet information and the index of the last element of the segment list;
obtaining, in a TLV field in the SRH of the data packet information, function locator information of at least two functions to be performed by the first network device, when it is determined that a TLV field exists in the SRH in the data packet information.

It should be noted that because the TLV field is an optional field, in the present disclosure, when the SRH includes the TLV field, it indicates that the function locator information needs to be obtained in the TLV field, and optionally, the determining whether there is a type length value TLV field in the SRH according to the relationship between the length of the SRH header in the SRH in the data packet information and the index of the last element of the segment list is:
if N1 is greater than (N2 + 1) × 2, determining that a type length value TLV field exists in the SRH; wherein N1 is the length of the SRH header, and N2 is the index of the last element of the segment list.

In other words, when the foregoing condition is met, the network device needs to check the TLV field to obtain the function locator information.

The specific implementation process of this case is as follows: first, the configuration indicates that network device needs to process an optional part TLV in the SRH header, and whether the SRH header contains the TLV can be identified through the relationship between the length (Hdr Ext Len) of the SRH header and the last element of the segment list, that is, when the Hdr Ext Len is greater than (Last Entry + 1) × 2, the TLV is indicated to indicate the network device to process the TLV; then a related function list index (40-32766) and content (which functions are included and an execution order of the functions) are defined in the TLV field. The network device instructs to match the function list defined in the TLV field according to the function field in the SID, and after the matching succeeds, the corresponding function list is executed, so as to complete multiple times of processing the data packet.

It should be noted that, the above describes the case in which the quantity of functions is less than 128 bits. When the function quantity is more than 128 bits, that is, when the SID corresponding to one forwarding device cannot represent all functions to be executed, another SID may be used to represent functions which cannot be accommodated by the 128 bits. When the another SID cannot indicate all remaining functions to be executed, still another SID may be introduced again for representation, and so on; In other words, one forwarding device may correspond to at least two SIDs.

In other words, when the number of functions to be performed by the first network device on the data packet is greater than a preset value, the SRH in the data packet information includes at least two segment identifiers corresponding to the first network device; the preset value is a maximum value of a quantity of functions indicated by a segment identifier corresponding to the first network device.

That is, for the case that Locator+Functions+Arguments<=128 bits, it can be supported that the total length of the SID is not greater than 128 bits in the case of H-1 Functions; however, if H functions are to be performed, the total length of the SID is greater than 128 bits, and in this case, related art may be used, that is, the number of SIDs is increased, and the H-th function is defined by using a separate SID, thereby implementing functions of the H functions.

The following describes specific applications of the present disclosure as follows.

First Specific Application Situation: Intrusion Detection

It is assumed that two hosts (hosts A and B) that only support IPv4 are enabled to implement traffic engineering and intrusion detection through SRv6, and a topological graph is shown in FIG. 5.

In FIG. 5, routers R1, R3, and R4 are routers supporting SRv6 (i.e. the forwarding device mentioned above), R2 is a router supporting only IPv6, static routing is achieved through static configuration, and interworking between routers is achieved only through IPv6.

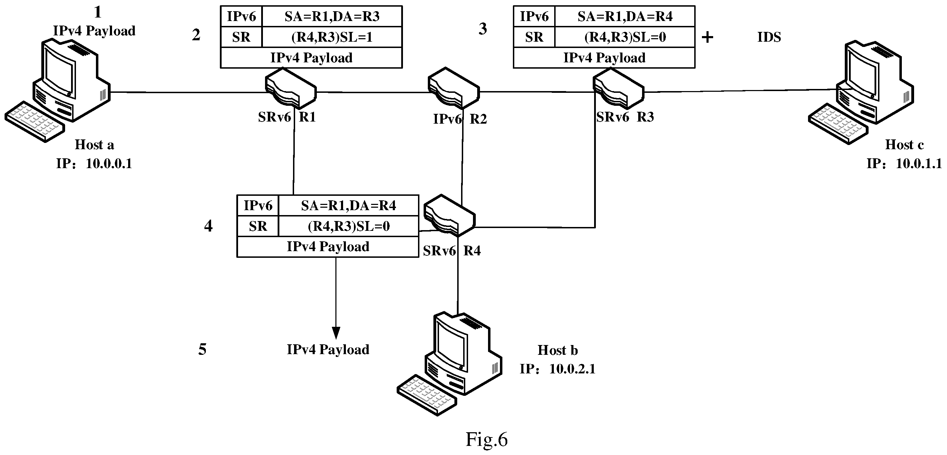

In this application situation, the purpose is to enable the host A and the host B to implement IPv4 interworking, and enable the data packet to pass through the R3 router, and at the same time implement the SRv6 data stream intrusion detection in the R3 router, thereby implementing traffic engineering + intrusion detection. The detailed packet forwarding process and the header change of each hop are shown in FIG. 6, and the numbers on the packet in FIG. 6 represent the forwarding order of the data packet in the network.

It should be noted that the segment list in FIG. 6 is arranged in an inverted order, that is, the first segment in the list is the last hop on the path, and the last segment in the list is the first hop of the path.

The detailed implementation process is as follows:
Step S11: first, the forwarding processing logic of the network device for the data packet is defined, that is, the processing logic of R1, R3, and R4 on the data packet is defined and delivered to different network devices, and the SDN controller controls the network device, delivers the flow table, and the like.
Step S12: when the data service flow sent by the host A reaches the router R1 supporting the SRv6, the controller issues the service flow to R1, R1 will encapsulate the matched data packet according the configured operation, and the matching field is: the IP address of the host A, and the execution action is: H.Encaps; i.e. IPv6 and SRH header is added to the outer layer, the source IP of the IPv6 header is the address of R1, the destination address is the IP address of R3, and the header of the SRH contains the SID (i.e. R3:: A and R4:: A) corresponding to the R3 and R4 addresses, and normal IPv6 forwarding is performed. The data packet processed by R1 is forwarded to R2, R2 may forward the matched data packet based on the configured static route and based on the destination IPv6 address.
Step S13: when the data packet arrives at R3, R3 performs a defined action on the function locator information corresponding to the obtained data packet according to the delivered flow table (specifically, R3 matches, according to the received data packet, the corresponding SID according to the destination address (the destination address is the IP address of R3), then obtains the function locator information according to the function field in the SID, and then determines a specific action by searching the flow table), and the action is: End.IDS. The SID corresponding to the R3 has two Functions, one function is a basic function, that is, the Segment Left is reduced by 1, the destination address of the IPv6 is updated according to the Segment list, and the data packet is forwarded to the next hop R4; and the second function is to perform function extension on the End operation to complete Intrusion Detection (Intrusion Detection System, IDS) on the SRv6 data packet matched by the R3. For the execution sequence of the intrusion detection extension function and the basic function of the SID, if there is a priority when the functions are defined, the intrusion detection extension function and the basis function of the SID are executed according to a priority; if there is no priority, then the functions are performed according to a sequence of defining the functions.
Step S14: at the router R4 supporting the SRv6, the R4 performs a defined action on the function locator information corresponding to the obtained data packet according to the delivered flow table, and the action is: End. DX4; that is, the IPv6 header of the outer layer is stripped off, and the contained IPv4 data packet is sent to the host B to complete the forwarding process.

It should be noted that the End.IDS mentioned in this case is defined SRv6 Endpoint Behaviors after the End function is extended, and the End operation and the intrusion detection are implemented without adding a device, and which device specifically implements intrusion detection is not limited to R3 in such an application situation, and may be designed according to networking requirement. H Endcaps, End, End.DX4 are the basic SRv6 Endpoint Behaviors specified by the SRv6 protocol. The flow table issuing or filling involved above is executed by the application layer or the SDN controller.

Second specific application situation, Secure Encryption

It is assumed that two hosts (hosts A and B) that only support IPv4 are enabled to implement traffic engineering and security encryption through SRv6, and a topological graph is shown in FIG. 5.

In FIG. 5, routers R1, R3, and R4 are routers supporting SRv6 (i.e. the forwarding devices mentioned above), R2 is a router supporting only IPv6, static routing is achieved through open source software, and interworking between the routers is achieved only through IPv6.

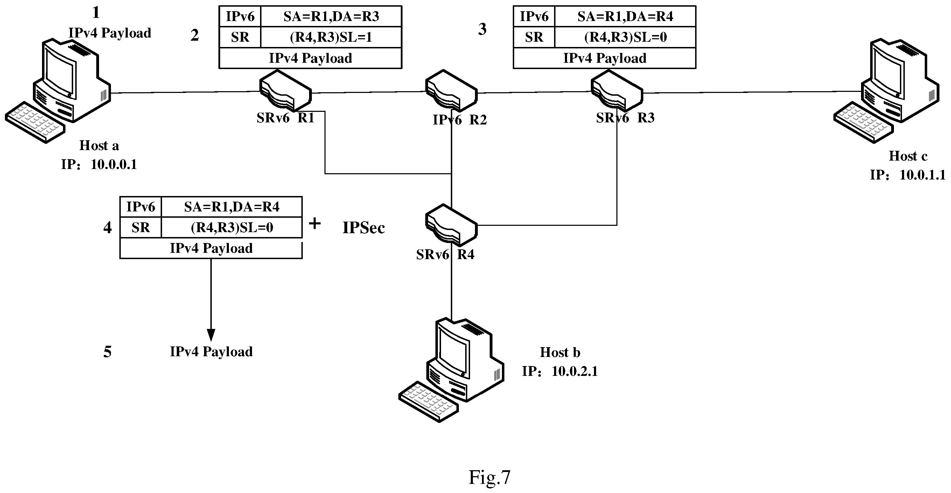

In this application, the purpose is to enable the host A and the host B to implement IPv4 interworking, and enable the data packet to pass through the router R4, and at the same time implement the SRv6 data stream security encryption in the R4 router, thereby implementing traffic engineering + security encryption. The detailed packet forwarding process and the header change of each hop are shown in FIG. 7, and the numbers on the packet in FIG. 7 represent the forwarding sequence of the data packet in the network.

It should be noted that the segment (SID) list in FIG. 7 is arranged in an inverted order, that is, the first segment (SID) in the list is the last hop on the path, and the last segment (SID) in the list is the first hop of the path.

The detailed implementation process is as follows:
Step S21: first, the forwarding processing logic of the network device for the data packet is defined, that is, the processing logic of R1, R3, and R4 on the data packet is defined and delivered to different network devices, and the SDN controller controls the network device, delivers the flow table, and the like.
Step S22: when the data service flow sent by the host A reaches the router R1 supporting the SRv6, the controller issues the flow table to the R1 according to the service flow of the host A, and R1 encapsulates the matched data packet according to the configured operation and the flow table, wherein the matching field is: the IP address of the host A, and the execution action is H.Encaps; i.e. an IPv6 and SRH header is added to the outer layer, the source IP of the IPv6 header is the address of R1, the destination address is the IP address of R3, and the header of the SRH contains the SIDs (i.e. R3: A and R4: A) corresponding to the R3 and R4 addresses, and normal IPv6 forwarding is performed. The data packet processed by R1 is forwarded to R2, R2 may forward the matched data packet based on the configured static route and based on the destination IPv6 address.
Step S23: when the data packet arrives at R3, R3 performs the defined action on the function locator information corresponding to the obtained data packet according to the delivered flow table, and the action is: End; that is, the Segment Left is reduced by 1, the destination address of the IPv6 is updated according to the Segment list, and the data packet is forwarded to the next hop R4.
Step S24: the router R4 supporting SRv6 performs a defined action on the function locator information corresponding to the obtained data packet according to the delivered flow table, wherein the action is: End.DX4SE; the SID corresponding to R4 has two Functions, one Function is the basic function, that is, the IPv6 header of the outer layer is stripped off; and the second function is to perform function expansion based on the End.DX4, perform IP layer security encryption on the SRv6 data flow passing through R4, and send the encrypted IPv4 data packet contained therein to the host B to complete the forwarding process. The execution sequence of the security encryption extension function and the basic functions of the SID is as follows: if there is a priority when a function is defined, the security encryption extension function and the basic function of the SID are executed according to the priority; if there is no priority, then a sequence of defining the functions is adopted.

It should be noted that the End.DX4SE mentioned in this case is the defined SRv6 Endpoint Behaviors after the End.DX4 function is expanded. Security encryption is implemented without adding a device, the device performing the security encryption is not limited to R4 in such an application situation, and networking design can be implemented according to requirements. H.Encaps, End, End.Dx 4 are the basic SRv6 endpoint behaviors specified by the SRv6 protocol. The flow table issuing or filling involved above is executed by the application layer or the SDN controller.

It should be noted that the embodiments of the present disclosure can achieve the following beneficial effects:
1. flexibility is good: the multi-function processing of the data packet can be implemented according to requirements.
2. cost is reduced: in this application, multiple times of processing the data packet may be completed without adding additional device resources.
3. delay is reduced: the current device performs processing on the data packet for multiple times; as compared with the case in which the data packet is processed by the current device after being processed by the third-party device, the delay is greatly reduced.
4. the overhead rate is saved: by extending the SID function, the number of SIDs is reduced under the condition that the same processing requirement is completed, so that the overhead of the data packet is reduced, and the effective utilization rate of the data packet is increased.
5. the number of flow tables is reduced: a primary flow table is delivered to complete multiple times of processing the data packet.

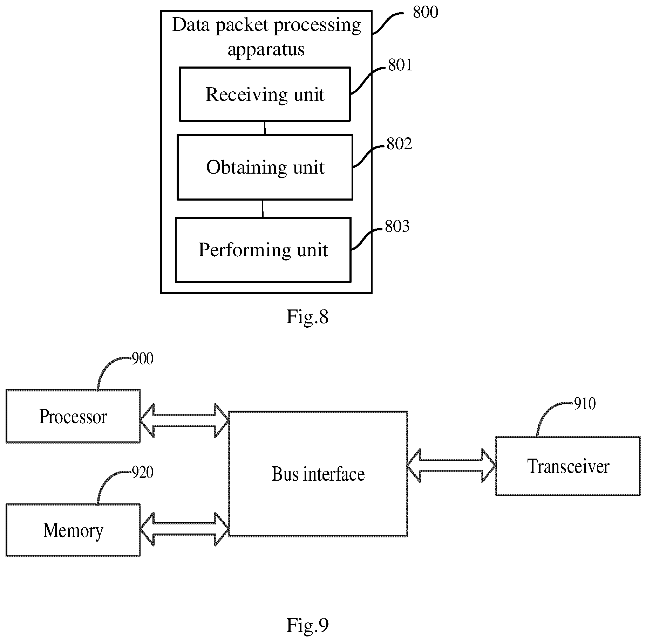

As shown in FIG. 8, an embodiment of the present disclosure provides a data packet processing apparatus 800, applied to a first network device and including:
a receiving unit 801, configured to receive data packet information sent by a second network device, wherein the data packet information carries a data packet;
an obtaining unit 802, configured to obtain, according to the data packet information, function locator information of at least two functions to be performed by the first network device on the data packet; and
a performing unit 803 is configured to determine, in a preset flow table, a target action corresponding to the function locator information, and perform the target action on the data packet.

Optionally, the obtaining unit 802 is configured to implement the following:
obtaining, in a function field in a segment identifier (SID) corresponding to the first network device, function locator information of at least two functions to be performed by the first network device on the data packet, wherein the segment identifier corresponding to the first network device is located in a segment routing packet header (SRH) in the data packet information;
obtaining, in a type length value (TLV) field in an SRH in the data packet information, function locator information of at least two functions to be performed by the first network device on the data packet.

Optionally, the function locator information of the at least two functions is indicated by using different bits in the function field; or the function locator information of the at least two functions is indicated by the same bit in the function field.

Optionally, a flags field in the SRH in the data packet information is configured to indicate whether there is at least one segment identifier corresponding to a plurality of functions; in a case that the flags field in the SRH in the data packet information indicates that there is at least one segment identifier corresponding to a plurality of functions, a Tag field in the data packet information is configured to indicate the at least one segment identifier and a quantity of the plurality of functions corresponding to the at least one segment identifier.

Optionally, obtaining, in the type length value (TLV) field in the SRH in the data packet information, function locator information of at least two functions to be performed by the first network device on the data packet includes:
determining whether a type length value TLV field exists in the SRH according to the relationship between the length of the SRH header in the SRH in the data packet information and the index of the last element of the segment list;
obtaining, in the TLV field in the SRH of the data packet information, function locator information of at least two functions to be performed by the first network device, when it is determined that the TLV field exists in the SRH in the data packet information.

Optionally, determining, according to the relationship between the length of the SRH header in the SRH in the data packet information and the index of the last element of the segment list, whether there is a type length value TLV field in the SRH includes:
if N1 is greater than (N2 +1) × 2, then determining that the type length value TLV field exists in the SRH; wherein N1 is the length of the SRH header, and N2 is the index of the last element of the segment list.

Optionally, in a case that the quantity of functions to be performed by the first network device on the data packet is greater than a preset value, the SRH in the data packet information includes at least two segment identifiers corresponding to the first network device; and the preset value is a maximum value of the quantity of functions indicated by a segment identifier corresponding to the first network device.

It should be noted that the apparatus embodiment is an apparatus corresponding to the foregoing method embodiments, and all implementations in the foregoing method embodiments are applicable to the apparatus embodiment, and can also achieve the same technical effect.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program codes, such as a USB flash drive, a removable hard disk, a read-only memory (ROM), a random access memory (RAM), a magnetic disk, or an optical disk.

As shown in FIG. 9, an embodiment of the present disclosure further provides a network device, wherein the network device is a first network device, and includes a processor 900, a transceiver 910, a memory 920, and a program stored on the memory 920 and executable on the processor 900, wherein the transceiver 910 is connected to the processor 900 and the memory 920 through a bus interface, and the processor 900 is configured to read the program in the memory to perform the following processes:
receiving data packet information from a second network device through the transceiver 910, wherein the data packet information carries a data packet;
obtaining, according to the data packet information, function locator information of at least two functions to be performed by the first network device on the data packet; and
determining, in a preset flow table, a target action corresponding to the function locator information, and performing the target action on the data packet.

The transceiver 910 is configured to receive and send data under the control of the processor 900.

In FIG. 9, the bus architecture may include any number of interconnected buses and bridges, and specifically, various circuits such as one or more processors represented by the processor 900 and a memory represented by the memory 920 are linked together. The bus architecture may also link various other circuits, such as a peripheral device, a voltage regulator, and a power management circuit, which are well known in the art, and therefore are not further described herein. The bus interface provides an interface. The transceiver 910 may be a plurality of elements, that is, includes a transmitter and a receiver, and provides units for communicating with various other apparatuses on a transmission medium, wherein the transmission mediums include transmission media such as a wireless channel, a wired channel, and an optical cable. The processor 900 is responsible for managing the bus architecture and general processing, and the memory 920 may store data used by the processor 900 when performing operations.

The processor 900 may be a central processing unit (CPU), an application specific integrated circuit (ASIC), a field-programmable gate array (FPGA), or a complex programmable logic device (CPLD), and the processor may also adopt a multi-core architecture.

Further, the processor is configured to read a computer program in the memory and perform one of the following operations:
obtaining, in a function field in a segment identifier (SID) corresponding to the first network device, function locator information of at least two functions to be performed by the first network device on the data packet, wherein the segment identifier corresponding to the first network device is located in a segment routing packet header (SRH) in the data packet information;
obtaining, in a type length value (TLV) field in an SRH in the data packet information, function locator information of at least two functions to be performed by the first network device on the data packet.

Further, the function locator information of the at least two functions is indicated by using different bits in the function field; or the function locator information of the at least two functions is indicated by the same bit in the function field.

Further, a flags field in the SRH in the data packet information is configured to indicate whether there is at least one segment identifier corresponding to a plurality of functions; in a case that the flags field in the SRH in the data packet information indicates that there is at least one segment identifier corresponding to a plurality of functions, a Tag field in the data packet information is configured to indicate the at least one segment identifier and a quantity of the plurality of functions corresponding to the at least one segment identifier.

Further, the processor is configured to read the computer program in the memory and perform the following operations:
determining whether a type length value TLV field exists in the SRH according to the relationship between the length of the SRH header in the SRH in the data packet information and the index of the last element of the segment list;
obtaining, in the TLV field in the SRH of the data packet information, function locator information of at least two functions to be performed by the first network device, when it is determined that the TLV field exists in the SRH in the data packet information.

Further, the processor is configured to read the computer program in the memory and perform the following operations:
if N1 is greater than (N2 +1) × 2, then determining that the type length value TLV field exists in the SRH; wherein N1 is the length of the SRH header, and N2 is the index of the last element of the segment list.

Further, in a case that the quantity of functions to be performed by the first network device on the data packet is greater than a preset value, the SRH in the data packet information includes at least two segment identifiers corresponding to the first network device; and the preset value is a maximum value of the quantity of functions indicated by a segment identifier corresponding to the first network device.

It should be noted that the above-mentioned network device provided in the embodiments of the present disclosure can implement all method steps implemented in the foregoing method embodiments, and can achieve the same technical effect, and details of the same parts and beneficial effects as those in the method embodiments in this embodiment are not described herein again.

An embodiment of the present disclosure further provides a computer-readable storage medium, on which a computer program is stored, wherein the computer program, when executed by a processor, implements the steps of the data packet processing method applied to the first network device. The processor-readable storage medium may be any usable medium or data storage device accessible by the processor, including but not limited to a magnetic memory (for example, a floppy disk, a hard disk, a magnetic tape, a magneto-optical (MO) disc, an optical memory (for example, a CD, a DVD, a BD, an HVD, etc.), and a semiconductor memory (for example, a ROM, an erasable programmable read-only memory (EPROM), Electrically Erasable Programmable Read Only Memory (EEPROM), Non-Volatile Memory (NAND Flash), Solid State Drive (SSD), etc.

A person skilled in the art should understand that the embodiments of the present disclosure may be provided as a method, a system, or a computer program product. Therefore, the present disclosure may take the form of an entire hardware embodiment, an entire software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing devices generate means for implementing the functions specified in one or more flows of the flowcharts and/or one or more blocks in the block diagrams.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

It should be noted that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a chip of the foregoing apparatus, or may be stored in a memory of the apparatus in a form of program codes, and a certain processing element of the apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the terms used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B".

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. A data packet processing method performed by a first network device, wherein the method comprises:
receiving data packet information from a second network device, wherein the data packet information carries a data packet;
obtaining, based on the data packet information, function locator information of at least two functions to be performed by the first network device on the data packet;
determining a target action corresponding to the function locator information, and performing the target action on the data packet.

2. The method according to claim 1, wherein obtaining, according to the data packet information, the function locator information of at least two functions to be performed by the first network device on the data packet comprises one of following:
obtaining, in a function field of a segment identifier corresponding to the first network device, the function locator information of the at least two functions to be performed by the first network device on the data packet, wherein a segment identifier corresponding to the first network device is located in a segment routing header SRH of the data packet information;
obtaining, in a type length value TLV field of the SRH, the function locator information of the at least two functions to be performed by the first network device on the data packet.

3. The method according to claim 2, wherein the function locator information of the at least two functions is indicated by different bits in the function field; or
the function locator information of the at least two functions is indicated by a same bit in the function field.

4. The method according to claim 3, wherein a flags field in the SRH is configured to indicate whether there is at least one segment identifier corresponding to a plurality of functions, and when the flags field in the SRH indicates that there is the at least one segment identifier corresponding to the plurality of functions, a tag field in the data packet information is configured to indicate the at least one segment identifier and a quantity of the plurality of functions corresponding to the at least one segment identifier.

5. The method according to claim 1, wherein in a case that a quantity of functions to be performed by the first network device on the data packet is greater than a preset value, the SRH comprises at least two segment identifiers corresponding to the first network device;
the preset value is a maximum value of a quantity of functions indicated by a segment identifier corresponding to the first network device.

6. A network device, the network device being a first network device, wherein the network device comprises a memory, a transceiver, and a processor;
the memory is configured to store a computer program; the transceiver is configured to send and receive data under the control of the processor; and the processor is configured to read the computer program in the memory and perform the following operations:
receiving data packet information from a second network device through the transceiver, wherein the data packet information carries a data packet;
obtaining, based on the data packet information, function locator information of at least two functions to be performed by the first network device on the data packet;
determining a target action corresponding to the function locator information, and performing the target action on the data packet.

7. The network device according to claim 6, wherein the processor is configured to read the computer program in the memory and perform one of the following operations:
obtaining, in a function field of a segment identifier corresponding to the first network device, the function locator information of the at least two functions to be performed by the first network device on the data packet, wherein a segment identifier corresponding to the first network device is located in a segment routing header SRH of the data packet information;
obtaining, in a type length value TLV field of the SRH, the function locator information of the at least two functions to be performed by the first network device on the data packet.

8. The network device according to claim 7, wherein the function locator information of the at least two functions is indicated by different bits in the function field; or
the function locator information of the at least two functions is indicated by a same bit in the function field.

9. The network device according to claim 8, wherein a flags field in the SRH is configured to indicate whether there is at least one segment identifier corresponding to a plurality of functions, and when the flags field in the SRH indicates that there is the at least one segment identifier corresponding to the plurality of functions, a tag field in the data packet information is configured to indicate the at least one segment identifier and a quantity of the plurality of functions corresponding to the at least one segment identifier.

10. The network device according to claim 6, wherein in a case that a quantity of functions to be performed by the first network device on the data packet is greater than a preset value, the SRH comprises at least two segment identifiers corresponding to the first network device;
the preset value is a maximum value of a quantity of functions indicated by a segment identifier corresponding to the first network device.

11. A data packet processing apparatus applied to a first network device, wherein the apparatus includes:
a receiving unit, configured to receive data packet information from a second network device, wherein the data packet information carries a data packet;
an obtaining unit, configured to obtain, based on the data packet information, function locator information of at least two functions to be performed by the first network device on the data packet;
a performing unit, configured to determine a target action corresponding to the function locator information, and perform the target action on the data packet.

12. The apparatus according to claim 11, wherein the obtaining unit is specifically configured to:
obtain, in a function field of a segment identifier corresponding to the first network device, the function locator information of the at least two functions to be performed by the first network device on the data packet, wherein a segment identifier corresponding to the first network device is located in a segment routing packet header SRH of the data packet information;
obtain, in a type length value TLV field of the SRH, the function locator information of the at least two functions to be performed by the first network device on the data packet.

13. The apparatus according to claim 12, wherein the function locator information of the at least two functions is indicated by different bits in the function field; or
the function locator information of the at least two functions is indicated by a same bit in the function field.

14. The apparatus according to claim 13, wherein a flags field in the SRH is configured to indicate whether there is at least one segment identifier corresponding to a plurality of functions, and when the flags field in the SRH indicates that there is the at least one segment identifier corresponding to the plurality of functions, a tag field in the data packet information is configured to indicate the at least one segment identifier and a quantity of the plurality of functions corresponding to the at least one segment identifier.

15. The apparatus according to claim 11, wherein in a case that a quantity of functions to be performed by the first network device on the data packet is greater than a preset value, the SRH comprises at least two segment identifiers corresponding to the first network device;
the preset value is a maximum value of a quantity of functions indicated by a segment identifier corresponding to the first network device.

16. A processor-readable storage medium, wherein the processor-readable storage medium stores a computer program, and the computer program is configured to cause a processor to perform the method according to any one of claims 1-5.
